# EUROPEAN PATENT SPECIFICATION

(11) **EP 4 223 106 B1**
(45) Date of publication and mention of the grant of the patent: **21.02.2024**
(21) Application number: 22207709.1
(22) Date of filing: 16.11.2022
(51) Int. Cl.: A01G 3/02, B26B 17/00

(54) **CUTTING TOOL**
SCHNEIDWERKZEUG
OUTIL DE COUPE

(30) Priority: 02.02.2022 EP 22154750
(43) Date of publication of application: 09.08.2023
(73) Proprietor: Husqvarna AB, 561 82 Huskvarna (SE)
(72) Inventor: Kohl, Peter, 89257 Illertissen (DE); Rudolf, Peter, 89250 Senden (DE)
(74) Representative: Finkele, Rolf

(56) References cited:
- DE-U1-202005 001 024
- US-A- 160 360
- US-A- 253 252
- US-A- 1 487 808

## Description

### TECHNICAL FIELD

The present disclosure relates to a cutting tool, and more particularly, to a toollessly removable clamping element of the cutting tool.

### BACKGROUND

Cutting tools such as secateurs, shears, pruners, and scissors, are commonly used for a variety of gardening operations such as cutting, pruning, trimming, and shearing of hedges, shrubs, plants, and the like. A stem, vegetation, or other material that is being cut by such cutting tools may usually fall on a ground surface or such material may sometimes fall onto hedges, shrubs, plants, and the like. Further, the cut material may stick to and also obstruct cutting blades or even a clamping element which generally assists cutting by the cutting blades of the cutting tool. Further, after completion of the gardening operations, it is necessary to properly clean and remove the cut materials such as from the cutting blades and the clamping element, to avoid any undesirable working or even damage to the cutting tool.

Conventional cutting tools are generally provided with an integrated clamping element which is generally disposed proximate a cutting blade of the cutting tool. However, the integrated clamping element cannot be detached from the cutting tool which may present difficulties while cleaning say of the cut materials, foreign impurities, and the like and maintenance of the cutting tool. Moreover, the integrated clamping element restricts a flexibility of the cutting tool as the cutting tool cannot be used as a standalone device. Thus, an improved design of the clamping element is needed that allows easy cleaning and maintenance of the cutting tool while allowing usage of the cutting tool without the clamping element.

An example of a clamping and shearing device is provided with CN 104 116 542 A (hereinafter referred to as '542 reference). The '542 reference discloses the clamping and shearing device which includes two forceps bodies hinged through a hinging shaft. An umbilical cord clamp, a blade and another umbilical cord clamp are sequentially arranged in a jaw of each forceps body from one side of the jaw to the other side of the jaw. The blades cut an umbilical cord when the umbilical cord clamps engage with the umbilical cord. The umbilical cord clamps are locked through mutual locking structures. The umbilical cord clamps are separated from the jaws through the pushing effect on umbilical cord clamp connecting ribs from the front ends of elastic strips. However, the '542 reference does not disclose a cutting device with a detachable clamping element, such as suitable for gardening application. Further, the clamping and shearing device of the present reference is based on the umbilical cord clamp whose detachment is based on cutting of the umbilical cord provided with a mechanism that eventually keeps the camping mechanism closed and removed from the shearing device. As such the clamping device is not to stay with shearing device in ordinary operation.

A further example of a clamping and shearing device is provided with US patent US 1,487,808 A (hereinafter referred to '808 reference). The clamping and shearing device comprises a shear which is made of two cutters being pivotable connected at a pivot point, and a pair of clamping jaws adapted to co-operate with the cutters for clamping a severed end of a stem or the like. Additionally, the jaws are made as an integral part of attaching flanges. The attaching flanges are mounted to the cutters by rivets or bolts. Each one of the attaching flanges is mounted to a respective one of the two cutters at the tip point of the respective cutter. Therefore, the '808 reference does not disclose a cutting device, in which a user is able to toollessly remove the coupling of the clamping element for easy cleaning and maintenance of the cutting tool after completion of the gardening operations. Therefore, the new design of the cutting tool provides flexibility to use the cutting tool with or without the clamping element switchable by the user in a toolless manner. Hence, a simple construction of the cutting tool allows easy and intuitive multi-functional use of the cutting tool by a user.

### SUMMARY

In view of the above, it is an objective of the present disclosure to solve or at least reduce the drawbacks discussed above. The objective is at least partially achieved by a cutting tool. The cutting tool includes a first handle and a second handle. The cutting tool includes a first cutting blade fixedly coupled to the first handle. The first cutting blade defines a first slot. The cutting tool includes a second cutting blade fixedly coupled to the second handle. The second cutting blade is pivotally coupled to the first cutting blade at a pivot point. The second cutting blade defines a second slot. The cutting tool further includes a clamping element having a first bracket defining a first coupling element, a second bracket defining a second coupling element, and a connecting portion connecting the first bracket and the second bracket. The cutting tool is characterized in that the clamping element is toollessly removably coupled to at least one of the first cutting blade and the second cutting blade. The first coupling element is adapted to toollessly removably engage with the first slot, and the second coupling element is adapted to toollessly removably engage with the second slot. Further, the first coupling element and the second coupling element structurally conform to the first slot and the second slot, respectively, such that the clamping element and at least one of the first cutting blade and the second cutting blade allow a clamped cutting action by the cutting tool.

Thus, the present disclosure provides an improved cutting tool that can be used for a variety of gardening operations such as cutting, pruning, trimming, and shearing of hedges, shrubs, plants, and the like. The clamping element of the cutting tool is toollessly removably coupled to the first cutting blade and/or the second cutting blade. During normal operation the clamping device stays attached to the shearing device. Whilst a user is able to manually and toollessly remove the coupling of the clamping element for easy cleaning and maintenance of the cutting tool after completion of the gardening operations. The new design of the cutting tool provides flexibility to use the cutting tool with or without the clamping element. Moreover, a simple construction of the cutting tool allows easy removal and coupling of the clamping element with the cutting tool.

According to an embodiment of the present disclosure, the first cutting blade defines a third slot, and the second cutting blade defines a fourth slot, and the connecting portion of the clamping element defines an additional coupling element. The third slot, the fourth slot, and the connecting portion together provide a simple construction of the cutting tool to allow removably coupling of the clamping element with the cutting tool.

According to an embodiment of the present disclosure, the additional coupling element is adapted to toollessly removably engage with at least one of the third slot, and the fourth slot proximate the pivot point. The third slot, the fourth slot, and the connecting portion allow robust as well as removable coupling of the clamping element with the cutting tool.

According to an embodiment of the present disclosure, the removable engagement of the additional coupling element with the third slot, and the fourth slot includes a clearance fit. Such a clearance fit allows for quick coupling (and decoupling) of the clamping element with the cutting tool.

According to an embodiment of the present disclosure, the clamping element includes one or more spacer elements. The spacer element may prevent an interference of the first and second brackets with the first and second cutting blades during the clamped cutting action.

According to an embodiment of the present disclosure, the clamping element includes a spring-loaded sheet metal. The clamping element may be made of any material including different metals, polymers, alloys, and the like, though choice of the spring-loaded sheet metal may provide flexibility and retracting action to the cutting tool during the clamped cutting action.

According to an embodiment of the present disclosure, the cutting tool is selected from a group comprising of a secateur, a shear, a pruner, and a scissor. The secateur, the shear, the pruner, and the scissor may be used in variety of gardening applications such as cutting, pruning, trimming, and shearing of hedges, shrubs, plants, and the like.

Other features and aspects of this disclosure will be apparent from the following description and the accompanying drawings.

### BRIEF DESCRIPTION OF THE DRAWINGS

The disclosure will be described in more detail with reference to the enclosed drawings, wherein:
**FIG. 1** illustrates a perspective view of a front side of a cutting tool, according to an embodiment of the present disclosure;
**FIG. 2** illustrates a perspective view of a rear side of the cutting tool, according to an embodiment of the present disclosure;
**FIG. 3** illustrates a partially exploded view of the cutting tool, according to an embodiment of the present disclosure;
**FIG. 4** illustrates a perspective view of a clamping element associated with the cutting tool, according to an embodiment of the present disclosure;
**FIG. 5** illustrates a perspective view of another clamping element associated with the cutting tool, according to another embodiment of the present disclosure;
**FIG. 6** illustrates a perspective view of a front side of a cutting tool, according to yet another embodiment of the present disclosure;
**FIG. 7** illustrates a perspective view of a rear side of the cutting tool, according to yet another embodiment of the present disclosure;
**FIG. 8** illustrates a partially exploded view of the cutting tool, according to yet another embodiment of the present disclosure;
**FIG. 9** illustrates a perspective view of a clamping element associated with the cutting tool, according to yet another embodiment of the present disclosure;
**FIG. 10** illustrates a front view of the cutting tool in an open position, according to yet another embodiment of the present disclosure; and
**FIG. 11** illustrates a front view of the cutting tool in a closed position, according to yet another embodiment of the present disclosure.

### DESCRIPTION OF EMBODIMENTS

The present disclosure will be described more fully hereinafter with reference to the accompanying drawings, in which example embodiments of the disclosure incorporating one or more aspects of the present disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art. For example, one or more aspects of the present disclosure may be utilized in other embodiments and even other types of structures and/or methods. In the drawings, like numbers refer to like elements.

Certain terminology is used herein for convenience only and is not to be taken as a limitation on the disclosure. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

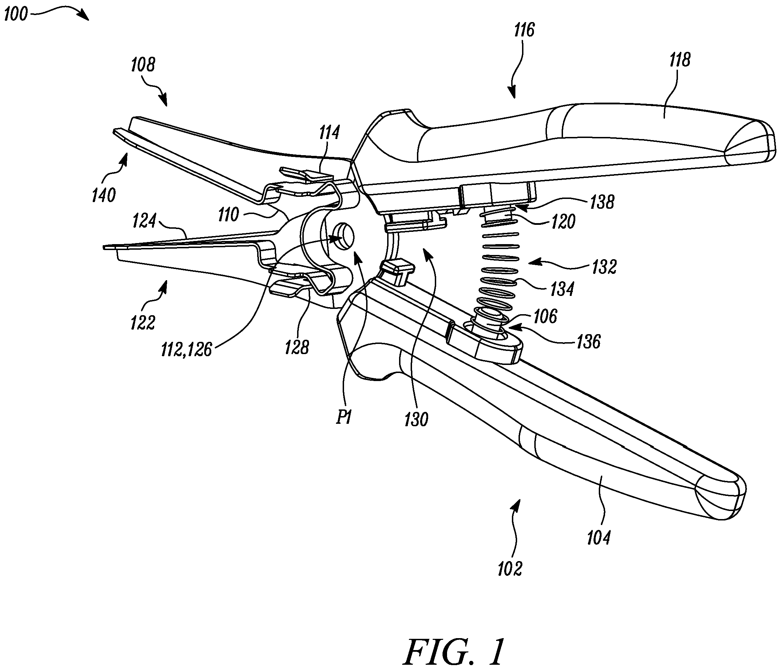

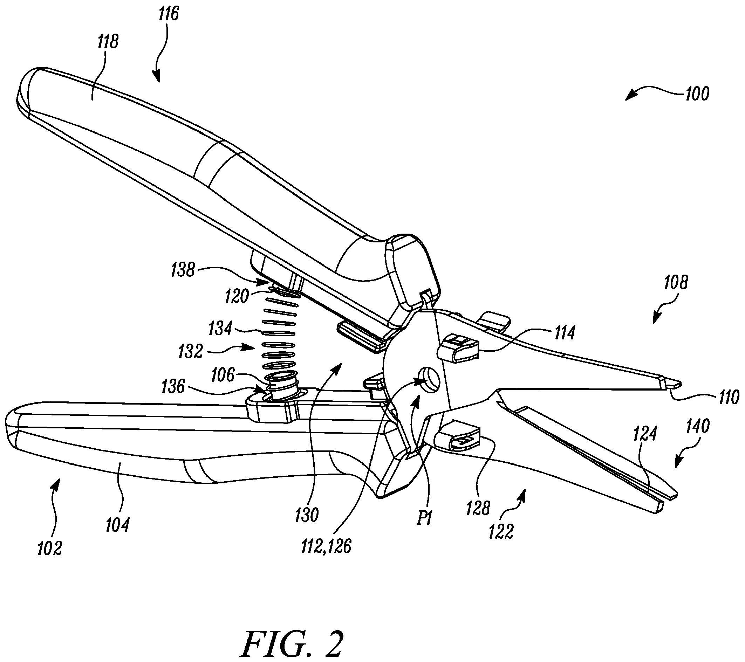

**FIGS. 1** and **2** illustrate perspective views of a front side and a rear side of a cutting tool **100.** The cutting tool **100** of the present disclosure may include any type of a cutting tool **100** generally known in the art for performing one or more gardening operations. For example, the cutting tool **100** may be utilized for cutting, pruning, trimming, and shearing of hedges, shrubs, plants, and the like. The cutting tool **100** may be selected from a group of cutting tools including a secateur, a shear, a pruner, and a scissor and the like. The cutting tool **100** may also be selected from any other type of a cutting tool as well which may be suitable for application with various aspects of the present disclosure.

The cutting tool **100** includes a first handle **102.** The first handle **102** of the cutting tool **100** includes a first gripping portion **104** to firmly grip the first handle **102** by a user. The first gripping portion **104** has a generally curved profile. The first handle **102** also includes a first lug **106.** The first handle **102** may be generally made up of a durable material, such as a wear resistant plastic, a metal alloy, and the like. It should be noted that a shape and the material of the first handle **102** does not limit the scope of the present disclosure in any manner.

The cutting tool **100** includes a first cutting blade **108** coupled to the first handle **102.** The first cutting blade **108** may be fixedly or removably coupled to the first handle **102.** In the illustrated embodiment, the first cutting blade **108** is fixedly coupled to the first handle **102.** In an embodiment, the first cutting blade **108** may be an integral part of the first handle **102,** or the first cutting blade **108** may be joined with the first handle **102** using one or more mechanical joints such as a bolted joint, a rivetted joint, a welded joint, and the like. The first cutting blade **108** may be generally manufactured using an alloy steel. However, the present disclosure is not limited by choice of material of the first blade **108** in any manner.

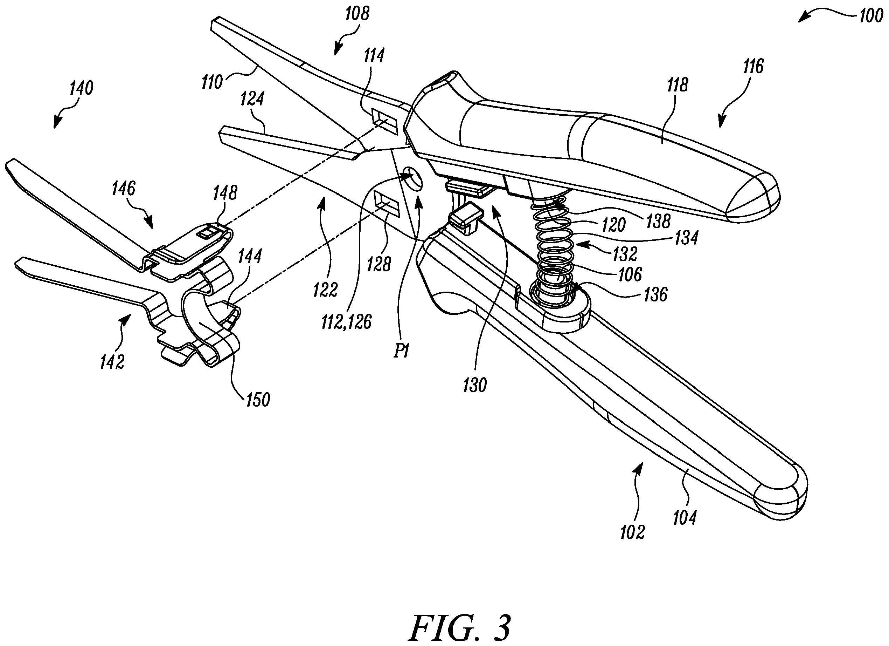

The first cutting blade **108** includes a first cutting edge **110.** The first cutting blade **108** defines a first pivot hole **112.** The first pivot hole **112** is illustrated to be circular in shape. The first cutting blade **108** further defines a first slot **114** (shown more clearly in **FIG. 3**). The first slot **114** is disposed proximate the first pivot hole **112.** In the illustrated embodiment, the first slot **114** has a substantially rectangular shape. It should be noted that the first slot **114** may have any other shape, size, orientation, without any limitations to the scope of the present disclosure.

The cutting tool **100** further includes a second handle **116.** The second handle **116** of the cutting tool **100** includes a second gripping portion **118** to firmly grip the second handle **116** by the user. The second gripping portion **118** has a generally curved profile. The second handle **116** also includes a second lug **120.** The second handle **116** may be generally made up of a durable material, such as a wear resistant plastic, a metal alloy, and the like. It should be noted that a shape and the material of the second handle **116** does not limit the scope of the present disclosure in any manner.

The cutting tool **100** includes a second cutting blade **122** coupled to the second handle **116.** The second cutting blade **122** may be fixedly or removably coupled to the second handle **116.** In the illustrated embodiment, the second cutting blade **122** is fixedly coupled to the second handle **116.** In an embodiment, the second cutting blade **122** may be an integral part of the second handle **116,** or the second cutting blade **122** may be joined with the second handle **116** using one or more mechanical joints such as a bolted joint, a rivetted joint, a welded joint, and the like. The second cutting blade **122** may be generally manufactured using an alloy steel. However, the present disclosure is not limited by choice of material of the second cutting blade **122** in any manner.

The second cutting blade **122** includes a second cutting edge **124.** The second cutting blade **122** defines a second pivot hole **126.** The second pivot hole **126** is illustrated to be circular in shape. The second cutting blade **122** defines the second pivot hole **126** such that the first pivot hole **112** overlaps with the second pivot hole **126.** The second cutting blade **122** is pivotally coupled to the first cutting blade **108** at a pivot point "**P1**". The pivot point "**P1**" includes a pivot pin (not shown) which is received by the first pivot hole **112** of the first cutting blade **108,** and the second pivot hole **126** of the second cutting blade **122.**

The second cutting blade **122** further defines a second slot **128** (shown more clearly in **FIG. 3**). The second slot **128** is disposed proximate the second pivot hole **126.** In the illustrated embodiment, the second slot **128** has a substantially rectangular shape. It should be noted that the second slot **128** may have any other shape, size, orientation, without any limitations to the scope of the present disclosure in any manner.

The cutting tool **100** also includes a latching mechanism **130** between the first handle **102** and the second handle **116.** The latching mechanism **130** may be manufactured using any material such as rubber, plastic, metal, and the like. The latching mechanism **130** is disposed proximate the pivot point "**P1**". In the illustrated embodiment, the latching mechanism **130** is fixedly coupled to the first handle **102.** In other embodiments, the latching mechanism **130** may be fixedly coupled to the second handle **116.**

In a closed position of the cutting tool **100,** the latching mechanism **130,** when slid towards the pivot point '**P1**' locks the first handle **102** and the second handle **116** so that the cutting tool **100** remains closed. In the illustrated embodiment, the latching mechanism **130** has a rectangular block shaped structure. In other embodiments, the latching mechanism **130** may be defined as any other suitable mechanism as well without any limitations.

The cutting tool **100** further includes a spring element **132** between the first handle **102** and the second handle **116.** In the illustrated embodiment, the spring element **132** includes a coil spring **134.** A first end **136** of the spring element **132** is fixedly coupled to the first lug **106** of the first handle **102,** and a second end **138** of the spring element **132** is fixedly coupled to the second lug **120** of the second handle **116.** It should be noted that the spring element **132** may include any type of spring such as a torsion spring, a disc spring, a leaf spring, and the like. The spring element **132** may be manufactured using a steel alloy that possesses elastic properties. The spring element **132** may be manufactured using any other suitable material as well, and the present disclosure is not limited by choice of material of the spring element **132** in any manner. Further, in the closed position of the cutting tool **100,** the spring element **132** provides a retracting action.

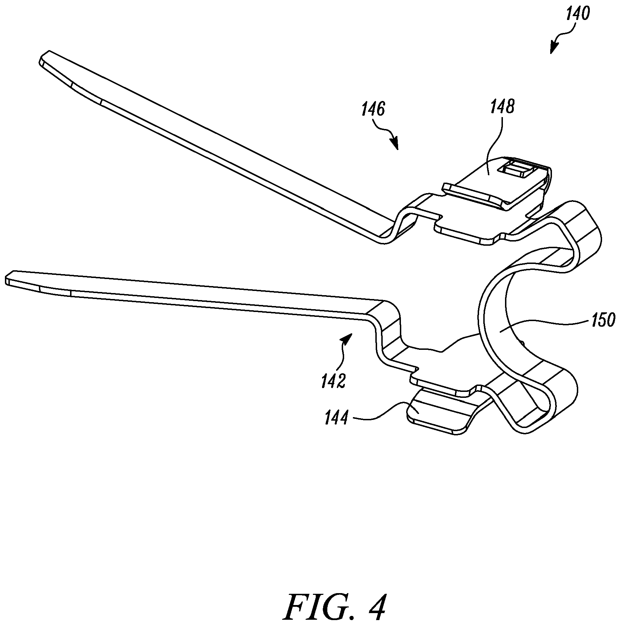

The cutting tool **100** further includes a clamping element **140.** The clamping element **140** is shown in further detail in **FIGS. 3** and **4****.** The clamping element **140** is used to clamp hedges, shrubs, plants, and the like, during a clamped cutting action. The clamping element **140** includes a spring-loaded sheet metal, in some embodiments. The sheet metal may be a thin sheet of metal that may be folded to a desired shape to achieve flexible and/or elastic properties. Further, the spring-loaded sheet metal may provide flexibility and desired (say retracting) force action to the cutting tool **100** during the clamped cutting action.

With continued reference to **FIGS. 3** and **4****,** the clamping element **140** includes a first bracket **142** defining a first coupling element **144.** In the illustrated embodiment, the first bracket **142** defines a planar structure which may facilitate the clamping of hedges, shrubs, plants, and the like. The first coupling element **144** defines a generally Z-shaped structure. In other embodiments, the first bracket **142** and the first coupling element **144** together may include any other shape, arrangement, orientation, and the like, without limiting the scope of the present disclosure.

The clamping element **140** also includes a second bracket **146** defining a second coupling element **148.** In the illustrated embodiment, the second bracket **146** defines a planar structure which may facilitate the clamping of hedges, shrubs, plants, and the like. The second coupling element **148** defines a generally Z-shaped structure. In some embodiments, the second bracket **146** and the second coupling element **148** may include any other shape, arrangement, orientation, and the like, without limiting the scope of the present disclosure. In the illustrated embodiment, the shape and size of the first bracket **142** and the second bracket **146** are identical. Further, the shape and size of the first coupling element **144** and the second coupling element **148** are also identical. In some embodiments, the shape and size of the first bracket **142** and the second bracket **146,** and the first coupling element **144** and the second coupling element **148** may not be identical.

The clamping element **140** further includes a connecting portion **150** connecting the first bracket **142** and the second bracket **146.** The first bracket **142,** the second bracket **146,** and the connecting portion **150** are integrally connected to each other. In the illustrated embodiment, the connecting portion **150** is substantially semi-circular in shape. The connecting portion **150** may be bent in such a way that the connecting element **150** is flexible and exhibits elastic properties.

Referring to **FIGS. 1 to 4****,** the clamping element **140** is toollessly removably coupled to one or more of the first cutting blade **108** and the second cutting blade **122.** The engagement of the clamping element **140** with the cutting tool **100** provides clamping of hedges, shrubs, plants, and the like, during the clamped cutting action. The first coupling element **144** toollessly removably engages with the first slot **114.** Further, the second coupling element **148** toollessly removably engages with the second slot **128.** The first coupling element **144** and the second coupling element **148** structurally conform to the first slot **114** and the second slot **128,** respectively, such that the clamping element **140** and one or more of the first cutting blade **108** and the second cutting blade **122** allow the clamped cutting action by the cutting tool **100.** Specifically, when the clamping element **140** is engaged with the cutting tool **100,** the first bracket **142** is disposed proximate the first cutting edge **110** of the first cutting blade **108,** and the second bracket **146** is disposed proximate the second cutting edge **124** of the second cutting blade **122.**

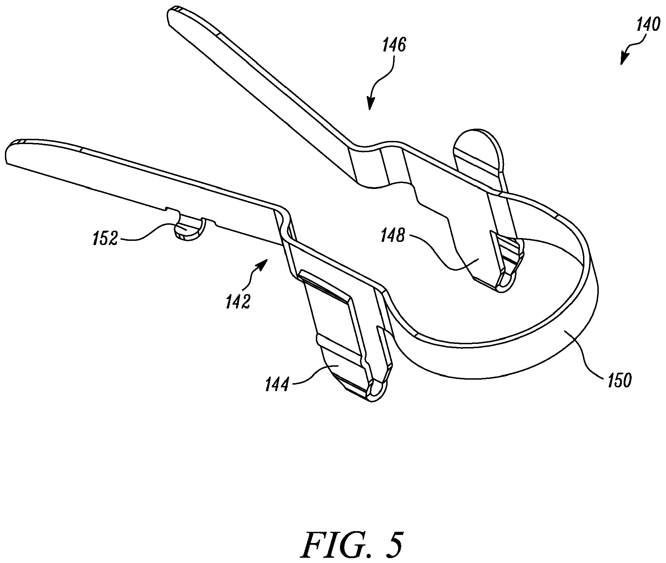

**FIG. 5** illustrates another embodiment of the present disclosure. The clamping element **140** further includes one or more spacer elements **152.** In the illustrated embodiment, the clamping element **140** includes one spacer element **152** connected to the first bracket **142.** The spacer element **152** is integral with the first bracket **142.** Alternatively, the spacer element **152** may be connected to the second bracket **146.** It should be noted that the clamping element **140** may include any number of the spacer elements **152,** without any limitations.

For example, each of the first bracket **142** and the second bracket **146,** may include the spacer element **152.** The spacer element **152** includes an L-shaped structure. The spacer element **152** prevents an interference of the first bracket **142** and the second bracket **146,** and with the first cutting blade **108** and the second cutting blade **122,** during the clamped cutting action. More particularly, the spacer element **152** rests against the second cutting blade **122** to prevent the interference of the first and second brackets **142, 146,** and with the first and second cutting blades **108, 122.**

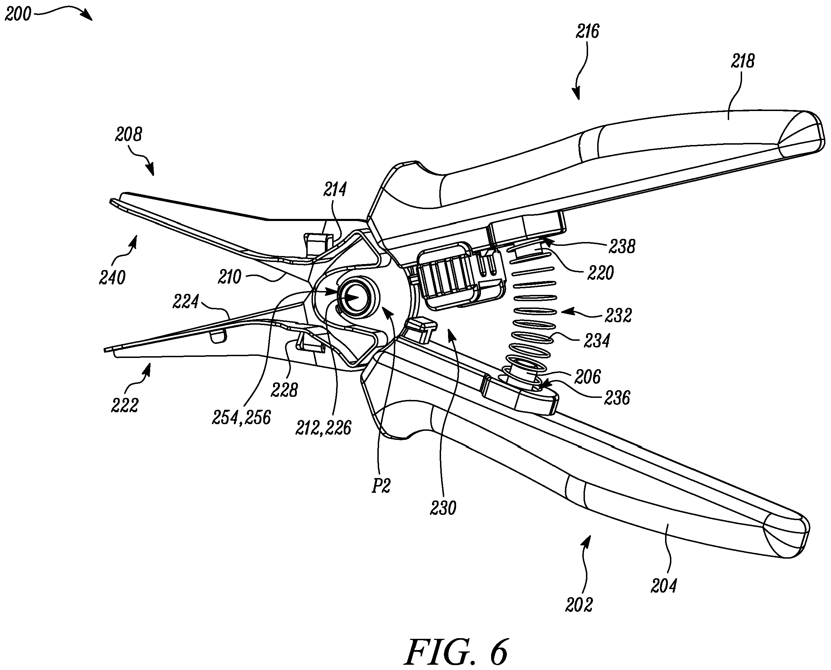

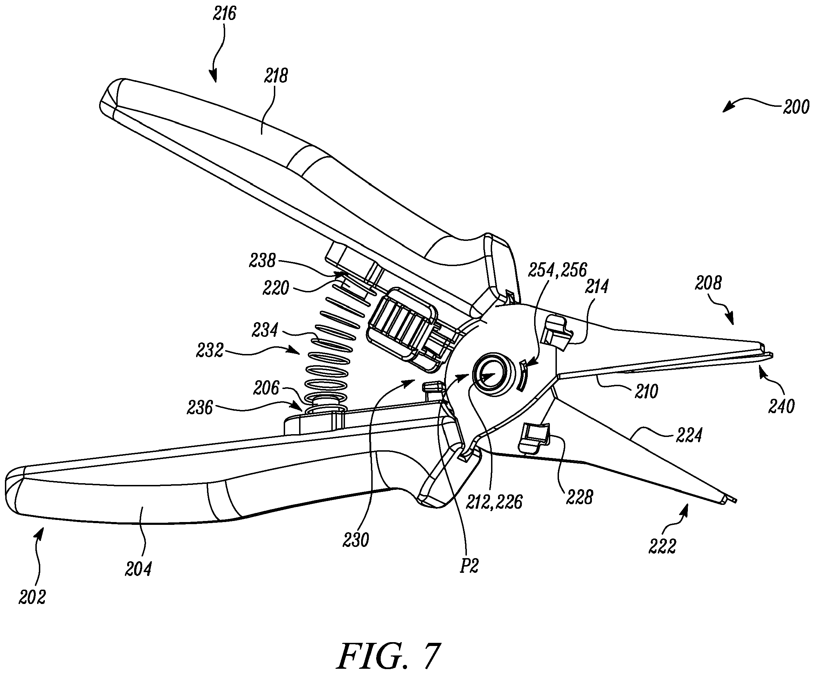

**FIGS. 6-11** illustrate another embodiment of the present disclosure. **FIGS. 6** and **7** illustrate perspective views of a front side and a rear side of another cutting tool **200.** The cutting tool **200** includes a first handle **202.** The first handle **202** of the cutting tool **200** includes a first gripping portion **204** to firmly grip the first handle **202** by a user. The first gripping portion **204** has a generally curved profile. The first handle **202** also includes a first lug **206.** The first handle **202** may be generally made up of a durable material, such as a wear resistant plastic, a metal alloy, and the like. It should be noted that a shape and the material of the first handle **202** does not limit the scope of the present disclosure in any manner.

The cutting tool **200** includes a first cutting blade **208** coupled to the first handle **202.** The first cutting blade **208** may be fixedly or removably coupled to the first handle **202.** In the illustrated embodiment, the first cutting blade **208** is fixedly coupled to the first handle **202.** In an embodiment, the first cutting blade **208** may be an integral part of the first handle **202,** or the first cutting blade **208** may be joined with the first handle **202** using one or more mechanical joints such as a bolted joint, a rivetted joint, a welded joint, and the like. The first cutting blade **208** may be generally manufactured using an alloy steel. However, the present disclosure is not limited by choice of material of the first blade **208** in any manner.

The first cutting blade **208** includes a first cutting edge **210.** The first cutting blade **208** defines a first pivot hole **212.** The first pivot hole **212** is illustrated to be circular in shape. The first cutting blade **208** further defines a first slot **214.** The first slot **214** is disposed proximate the first pivot hole **212.** In the illustrated embodiment, the first slot **214** has a substantially rectangular shape. It should be noted that the first slot **214** may have any other shape, size, orientation, without any limitations to the scope of the present disclosure. Further, the first cutting blade **208** defines a third slot **254.** The third slot **254** is disposed proximate to the first pivot hole **212.**

The cutting tool **200** further includes a second handle **216.** The second handle **216** of the cutting tool includes a second gripping portion **218** to firmly grip the second handle **216** by the user. The second gripping portion **218** has a generally curved profile. The second handle **216** also includes a second lug **220.** The second handle **216** may be generally made up of a durable material, such as a wear resistant plastic, a metal alloy, and the like. It should be noted that a shape and the material of the second handle **216** does not limit the scope of the present disclosure in any manner.

The cutting tool **200** includes a second cutting blade **222** coupled to the second handle **216.** The second cutting blade **222** may be fixedly or removably coupled to the second handle **216.** In the illustrated embodiment, the second cutting blade **222** is fixedly coupled to the second handle **216.** In an embodiment, the second cutting blade **222** may be an integral part of the second handle **216,** or the second cutting blade **222** may be joined with the second handle **216** using one or more mechanical joints such as a bolted joint, a rivetted joint, a welded joint, and the like. The second cutting blade **222** may be generally manufactured using an alloy steel. However, the present disclosure is not limited by choice of material of the second cutting blade **222** in any manner.

The second cutting blade **222** includes a second cutting edge **224.** The second cutting blade defines a second pivot hole **226.** The second pivot hole **226** is illustrated to be circular in shape. The second cutting blade **222** defines the second pivot hole **226** such that the first pivot hole **212** overlaps with the second pivot hole **226.** The second cutting blade **222** is pivotally coupled to the first cutting blade **208** at a pivot point "**P2**". The pivot point "**P2**" includes a pivot pin (noy shown) which is received by the first pivot hole **212** of the first cutting blade **208,** and the second pivot hole **226** of the second cutting blade **222.**

The second cutting blade **222** further defines a second slot **228.** The second slot **228** is disposed proximate the second pivot hole **226.** In the illustrated embodiment, the second slot **228** has a substantially rectangular shape. It should be noted that the second slot **228** may have any other shape, size, orientation, without any limitations to the scope of the present disclosure in any manner. Further, the second cutting blade **222** defines a fourth slot **256.** The fourth slot **256** is disposed proximate to the second pivot hole **226.**

The cutting tool **200** also includes a latching mechanism **230** between the first handle **202** and the second handle **216** similar to the latching mechanism **130** as explained earlier. The cutting tool **200** further includes a spring element **232** between the first handle **202** and the second handle **216** similar to the spring element **132** as explained earlier.

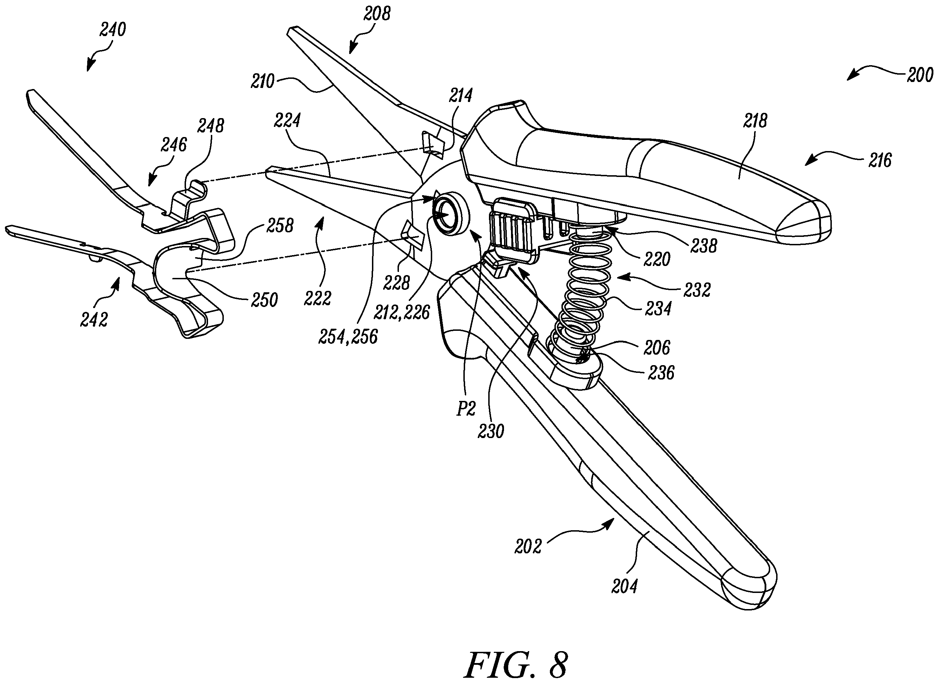

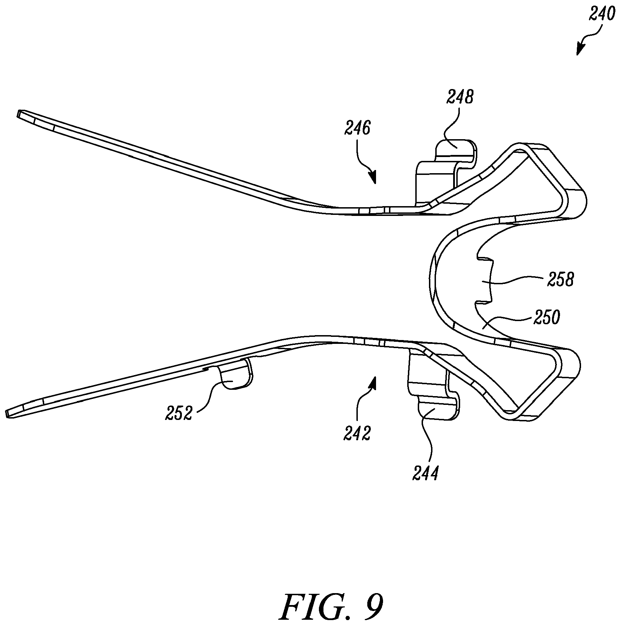

The cutting tool **200** further includes a clamping element **240.** The clamping element **240** is shown in further detail in **FIGS. 8** and **9****.** The clamping element **240** is used to clamp hedges, shrubs, plants, and the like, during a clamped cutting action. The clamping element **240** includes a spring-loaded sheet metal, in some embodiments. The sheet metal may be a thin sheet of metal that may be folded to a desired shape to achieve flexible and/or elastic properties. Further, the spring-loaded sheet metal may provide flexibility and desired (say retracting) force action to the cutting tool **200** during the clamped cutting action.

With continued reference to **FIGS. 8** and **9****,** the clamping element **240** includes a first bracket **242** defining a first coupling element **244.** In the illustrated embodiment, the first bracket **242** defines a planar structure which may facilitate the clamping of hedges, shrubs, plants, and the like. The first coupling element **244** defines a generally Z-shaped structure. In other embodiments, the first bracket **242** and the first coupling element **244** together may include any other shape, arrangement, orientation, and the like, without limiting the scope of the present disclosure.

The clamping element **240** also includes a second bracket **246** defining a second coupling element **248.** In the illustrated embodiment, the second bracket **246** defines a planar structure which may facilitate the clamping of hedges, shrubs, plants, and the like. The second coupling element **248** defines a generally Z-shaped structure. In some embodiments, the second bracket **246** and the second coupling element **248** may include any other shape, arrangement, orientation, and the like, without limiting the scope of the present disclosure. In the illustrated embodiment, the shape and size of the first bracket **242** and the second bracket **246** are identical. Further, the shape and size of the first coupling element **244** and the second coupling element **248** are also identical. In some embodiments, the shape and size of the first bracket **242** and the second bracket **246,** and the first coupling element **244** and the second coupling element **248** may not be identical.

The clamping element **240** further includes a connecting portion **250** connecting the first bracket **242** and the second bracket **246.** The first bracket **242,** the second bracket **246,** and the connecting portion **250** are integrally connected to each other. In the illustrated embodiment, the connecting portion **250** is substantially semi-circular in shape. The connecting portion **250** may be bent in such a way that the connecting element **250** is flexible and exhibits elastic properties. The connecting portion **250** of the clamping element **240** defines an additional coupling element **258.** The additional coupling element **258** defines a substantially rectangular shaped structure. The additional coupling element **258** preferably includes a curved profile that coincides with a profile of the rest of the connecting portion **250.**

The clamping element **240** may further include one or more spacer elements **252.** In the illustrated embodiment, the clamping element **240** includes one spacer element **252** connected to the first bracket **242.** The spacer element **252** is integral with the first bracket **242.** Alternatively, the spacer element **252** may be connected to the second bracket **246.** It should be noted that the clamping element **240** may include any number of the spacer elements **252,** without any limitations.

For example, each of the first bracket **242** and the second bracket **246,** may include the spacer element **252.** The spacer element **252** includes an L-shaped structure. The spacer element **252** prevents an interference of the first bracket **242** and the second bracket **246,** and with the first cutting blade **208** and the second cutting blade **222,** during the clamped cutting action. More particularly, the spacer element **252** rests against the second cutting blade **222** to prevent the interference of the first and second brackets **242, 246,** and with the first and second cutting blades **208, 222.**

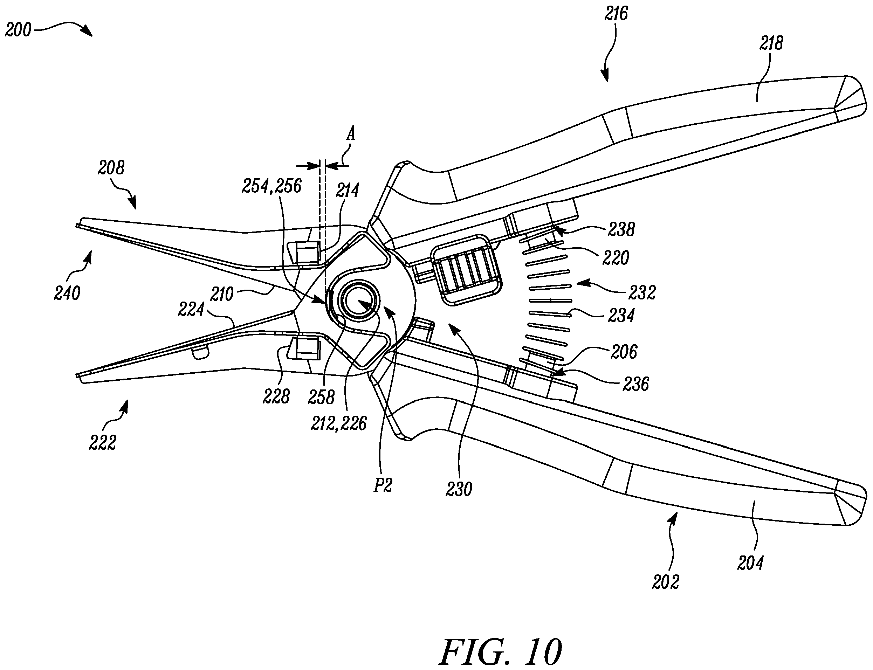

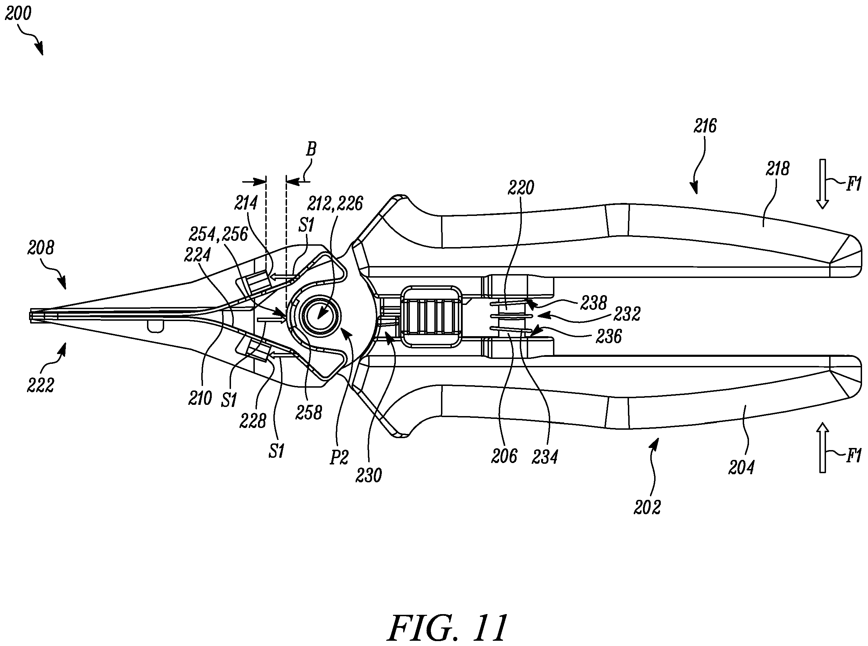

Now referring to **FIGS. 10** and **11****,** which illustrate the cutting tool **200** in an opened position and a closed position, respectively. In the opened position of the cutting tool **200,** no external forces "**F1**" act on the first handle **202** and the second handle **216.** As external forces **"F1"** are applied on the first handle **202** and the second handle **216** during the clamped cutting action, a pivoting action on the pivot point "**P1**" transfers the external forces "**F1**" to the first cutting edge **210** of the first cutting blade **208** and the second cutting edge **224** of the second cutting blade **222.** The cutting action of the first cutting blade **208** and the second cutting blade **222** closes the clamping element **240.**

More particularly, in the closed position of the cutting tool **200,** the elastic nature of the clamping element **240** allows the clamping element **240** to clamp the hedges, shrubs, plants, and the like as shown in **FIG. 11****.** Further, when no external forces "**F1**" act on the first handle **202** and the second handle **216,** and the cutting tool **200** moves to the opened position, the elastic nature of the clamping element **240** allows the clamping element **240** to return to its original shape as shown in **FIG. 10****.**

Further, a closing action of the clamping element **240** induces tensile stresses "**S1**" between the first bracket **242** and the second bracket **246** in an area between the second coupling element **248** and the additional coupling element **258** as well as the first coupling element **244.** In these areas mentioned the induced tensile stresses **"S1"** move the clamping element **240** in lead towards the pivot point "**P1**" during the closing movement of the handle elements **102** and **116.** As can be seen with **FIG. 11** in the closed state of the cutting tool the distance between the additional coupling element **258** and the third and fourth slots **254, 256** (and consequently the first coupling element **244** and the second coupling element **248** of the clamping element **240**) that is **A** in the open state of the cutting tool (**Fig. 10**) has moved along a longitudinal axis away from the pivot point **P1** towards the distance **B.** It should be contemplated that the cutting tool **100, 200** may also be envisioned without the additional coupling element **258,** and may work well within the scope of the present disclosure.

The present disclosure provides an improved cutting tool **100, 200** for variety of gardening operations such as cutting, pruning, trimming, and shearing of hedges, shrubs, plants, and the like. The clamping element **140, 240** of the cutting tool **100, 200** can be removably coupled to the first cutting blade **108, 208** and/or the second cutting blade **122, 222.** The removable coupling of the clamping element **140, 240** allows easy cleaning and maintenance of the cutting tool **100, 200** after the gardening operations. The improved design of the cutting tool **100, 200** provides flexibility to use the cutting tool **100, 200** with or without the clamping element **140, 240.** Further, a simple, and compact construction of the cutting tool **100, 200** allows easy removal and coupling of the clamping element **140, 240.**

Moreover, the spacer element **152** prevents the interference of the first and second brackets **142, 146,** with the first and second cutting blades **108, 122,** during the clamped cutting action.

In the drawings and specification, there have been disclosed preferred embodiments and examples of the disclosure and, although specific terms are employed, they are used in a generic and descriptive sense only and not for the purpose of limitation of the scope of the invention being set forth in the following claims.

### LIST OF ELEMENTS

- **100**: Cutting Tool
- **102**: First Handle
- **104**: First Gripping Portion
- **106**: First Lug
- **108**: First Cutting Blade
- **110**: First Cutting Edge
- **112**: First Pivot Hole
- **114**: First Slot
- **116**: Second Handle
- **118**: Second Gripping Portion
- **120**: Second Lug
- **122**: Second Cutting Blade
- **124**: Second Cutting Edge
- **126**: Second Pivot Hole
- **128**: Second Slot
- **130**: Latching Mechanism
- **132**: Spring Element
- **134**: Coil Spring
- **136**: First End
- **138**: Second End
- **140**: Clamping Element
- **142**: First Bracket
- **144**: First Coupling Element
- **146**: Second Bracket
- **148**: Second Coupling Element
- **150**: Connecting Portion
- **152**: Spacer Element
- **P1**: Pivot Point
- **200**: Cutting Tool
- **202**: First Handle
- **204**: First Gripping Portion
- **206**: First Lug
- **208**: First Cutting Blade
- **210**: First Cutting Edge
- **212**: First Pivot Hole
- **214**: First Slot
- **216**: Second Handle
- **218**: Second Gripping Portion
- **220**: Second Lug
- **222**: Second Cutting Blade
- **224**: Second Cutting Edge
- **226**: Second Pivot Hole
- **228**: Second Slot
- **230**: Latching Mechanism
- **232**: Spring Element
- **240**: Clamping Element
- **242**: First Bracket
- **244**: First Coupling Element
- **246**: Second Bracket
- **248**: Second Coupling Element
- **250**: Connecting Portion
- **252**: Spacer element
- **254**: Third Slot
- **256**: Fourth Slot
- **258**: Additional Coupling Element
- **P2**: Pivot Point
- **F1**: External force
- **S1**: Tensile stress
- **A, B**: Distances

## Claims

1. A cutting tool (**100**, **200**) comprising:
a first handle (**102**, **202**);
a second handle (**116**, **216**);
a first cutting blade (**108**, **208**) fixedly coupled to the first handle (**102**, **202**), wherein the first cutting blade (**108**, **208**) defines a first slot (**114**, **214**);
a second cutting blade (**122, 222**) fixedly coupled to the second handle (**116, 216**), wherein the second cutting blade (**122, 222**) is pivotally coupled to the first cutting blade (**108, 208**) at a pivot point (**P1, P2**), and wherein the second cutting blade (**122**, **222**) defines a second slot (**128**, **228**); and
a clamping element (**140**, **240**) including:
a first bracket (**142**, **242**) defining a first coupling element (**144**, **244**);
a second bracket (**146**, **246**) defining a second coupling element (**148**, **248**); and
a connecting portion (**150**, **250**) connecting the first bracket (**142**, **242**) and the second bracket (**146**, **246**);
**characterized in that:**
the clamping element (**140, 240**) is removably toollessly coupled to at least one of the first cutting blade (**108, 208**) and the second cutting blade (**122, 222**), wherein:
the first coupling element (**144, 244**) is adapted to toollessly removably engage with the first slot (**114, 214**), and
the second coupling element (**148, 248**) is adapted to toollessly removably engage with the second slot (**128, 228**),
wherein the first coupling element (**144, 244**) and the second coupling element (**148, 248**) structurally conform to the first slot (**114, 214**) and the second slot (**128, 228**), respectively, such that the clamping element (**140, 240**) and at least one of the first cutting blade (**108, 208**) and the second cutting blade (**122, 222**) allow a clamped cutting action by the cutting tool (**100, 200**).

2. The cutting tool (**200**) of claim **1**, wherein the first cutting blade (**208**) defines a third slot (**254**), and the second cutting blade (**222**) defines a fourth slot (**256**), and the connecting portion (**250**) of the clamping element (**240**) defines an additional coupling element (**258**).

3. The cutting (**200**) tool of claim **2,** wherein the additional coupling element (**258**) is adapted to toollessly removably engage with at least one of the third slot (**254**), and the fourth slot (**256**) proximate the pivot point (**P1**).

4. The cutting tool (**200**) of claim **3,** wherein the additional coupling element (**258**) is further adapted to toollessly removably engage with the third slot (**254**), and the fourth slot (**256**) including a clearance fit.

5. The cutting tool (**100, 200**) of any of the preceding claims, wherein the clamping element (**140, 240**) includes at least one spacer element (**152, 252**).

6. The cutting tool (**100, 200**) of any of the preceding claims, wherein the clamping element (**140, 240**) includes a spring-loaded sheet metal.

7. The cutting tool (**100, 200**) of any of the preceding claims, wherein the cutting tool (**100, 200**) is selected from a group comprising of a secateur, a shear, a pruner, and a scissor.

## Patentansprüche

1. Schneidwerkzeug **(100, 200)**, umfassend:
einen ersten Griff **(102, 202)**;
einen zweiten Griff **(116, 216)**;
eine erste Schneidklinge **(108, 208)**, die mit dem ersten Griff **(102, 202)** fest gekoppelt ist, wobei die erste Schneidklinge **(108, 208)** einen ersten Schlitz **(114, 214)** definiert;
eine zweite Schneidklinge **(122, 222)**, die mit dem zweiten Griff **(116, 216)** fest gekoppelt ist, wobei die zweite Schneidklinge **(122, 222)** mit der ersten Schneidklinge **(108, 208)** an einem Drehpunkt **(P1, P2)** drehbar gekoppelt ist und wobei die zweite Schneidklinge **(122, 222)** einen zweiten Schlitz **(128, 228)** definiert; und
ein Klemmelement **(140, 240)**, einschließlich:
einer ersten Halterung **(142, 242)**, die ein erstes Kopplungselement **(144, 244)** definiert;
einer zweiten Halterung **(146, 246)**, die ein zweites Kopplungselement **(148, 248)** definiert; und
eines Verbindungsabschnitts **(150, 250)**, der die erste Halterung **(142, 242)** und die zweite Halterung **(146, 246)** verbindet;
**dadurch gekennzeichnet, dass:**
das Klemmelement **(140, 240)** mit mindestens einer der ersten Schneidklinge **(108, 208)** und der zweiten Schneidklinge **(122, 222)** entfernbar werkzeuglos gekoppelt ist, wobei:
das erste Kopplungselement **(144, 244)** angepasst ist, um in den ersten Schlitz **(114, 214)** werkzeuglos entfernbar einzugreifen, und
das zweite Kopplungselement **(148, 248)** angepasst ist, um in den zweiten Schlitz **(128, 228)** werkzeuglos entfernbar einzugreifen,
wobei das erste Kopplungselement **(144, 244)** und das zweite Kopplungselement **(148, 248)** mit dem ersten Schlitz **(114, 214)** und dem zweiten Schlitz **(128, 228)** jeweils derart strukturell übereinstimmen, dass das Klemmelement **(140, 240)** und mindestens eine der ersten Schneidklinge **(108, 208)** und der zweiten Schneidklinge **(122, 222)** eine klemmende Schneidwirkung durch das Schneidwerkzeug **(100, 200)** ermöglichen.

2. Schneidwerkzeug **(200)** nach Anspruch 1, wobei die erste Schneidklinge **(208)** einen dritten Schlitz **(254)** definiert, und die zweite Schneidklinge **(222)** einen vierten Schlitz **(256)** definiert, und der Verbindungsabschnitt **(250)** des Klemmelements **(240)** ein zusätzliches Kopplungselement **(258)** definiert.

3. Werkzeug zum Schneiden **(200)** nach Anspruch **2**, wobei das zusätzliche Kopplungselement **(258)** angepasst ist, um in mindestens einen des dritten Schlitzes **(254)** und des vierten Schlitzes **(256)** nahe dem Drehpunkt **(P1)** werkzeuglos entfernbar einzugreifen.

4. Schneidwerkzeug **(200)** nach Anspruch 3, wobei das zusätzliche Kopplungselement **(258)** ferner angepasst ist, um in den dritten Schlitz **(254)** und den vierten Schlitz **(256)** einschließlich einer Spielpassung werkzeuglos entfernbar einzugreifen.

5. Schneidwerkzeug **(100, 200)** nach einem der vorstehenden Ansprüche, wobei das Klemmelement **(140, 240)** mindestens ein Abstandshalterelement **(152, 252)** einschließt.

6. Schneidwerkzeug **(100, 200)** nach einem der vorstehenden Ansprüche, wobei das Klemmelement **(140, 240)** ein federbelastetes Blech einschließt.

7. Schneidwerkzeug **(100, 200)** nach einem der vorstehenden Ansprüche, wobei das Schneidwerkzeug **(100, 200)** aus einer Gruppe ausgewählt ist, umfassend eine Gartenschere, eine Heckenschere, eine Rebschere und eine Schere.

## Revendications

1. Outil de coupe **(100, 200)** comprenant :
une première poignée **(102, 202)** ;
une seconde poignée **(116, 216)** ;
une première lame de coupe **(108, 208)** accouplée fixement à la première poignée **(102, 202)**, dans lequel la première lame de coupe **(108, 208)** définit une première fente **(114, 214)** ;
une seconde lame de coupe **(122, 222)** accouplée fixement à la seconde poignée **(116, 216)**, dans lequel la seconde lame de coupe **(122, 222)** est accouplée de manière pivotante à la première lame de coupe **(108, 208)** au niveau d'un point de pivot **(P1, P2)**, et dans lequel la seconde lame de coupe **(122, 222)** définit une deuxième fente **(128, 228)** ; et
un élément de serrage **(140, 240)** comportant :
une première patte **(142, 242)** définissant un premier élément d'accouplement **(144, 244)** ;
une seconde patte **(146, 246)** définissant un second élément d'accouplement **(148, 248)** ; et
une partie de liaison **(150, 250)** reliant la première patte **(142, 242)** et la seconde patte **(146, 246)** ;
**caractérisé en ce que** :
l'élément de serrage **(140, 240)** est accouplé de manière amovible sans outil à au moins l'une parmi la première lame de coupe **(108, 208)** et la seconde lame de coupe **(122, 222)**, dans lequel :
le premier élément d'accouplement **(144, 244)** est conçu pour venir en prise sans outil de manière amovible avec la première fente **(114, 214)**, et
le second élément d'accouplement **(148, 248)** est conçu pour venir en prise sans outil de manière amovible avec la deuxième fente **(128, 228)**,
dans lequel le premier élément d'accouplement **(144, 244)** et le second élément d'accouplement **(148, 248)** prennent structurellement la forme de la première fente **(114, 214)** et de la deuxième fente **(128, 228)**, respectivement, de telle sorte que l'élément de serrage **(140, 240)** et au moins l'une parmi la première lame de coupe **(108, 208)** et la seconde lame de coupe **(122, 222)** permettent une action de coupe serrée de l'outil de coupe **(100, 200).**

2. Outil de coupe **(200)** selon la revendication 1, dans lequel la première lame de coupe **(208)** définit une troisième fente **(254),** et la seconde lame de coupe **(222)** définit une quatrième fente **(256),** et la partie de liaison **(250)** de l'élément de serrage **(240)** définit un élément d'accouplement supplémentaire **(258).**

3. Outil de coupe **(200)** selon la revendication **2**, dans lequel l'élément d'accouplement supplémentaire **(258)** est conçu pour venir en prise sans outil de manière amovible avec au moins l'une parmi la troisième fente **(254)** et la quatrième fente **(256)** à proximité du point de pivot **(P1).**

4. Outil de coupe **(200)** selon la revendication **3**, dans lequel l'élément d'accouplement supplémentaire **(258)** est conçu en outre pour venir en prise sans outil de manière amovible avec la troisième fente **(254)** et la quatrième fente **(256)** y compris un ajustement avec jeu.

5. Outil de coupe **(100, 200)** selon l'une quelconque des revendications précédentes, dans lequel l'élément de serrage **(140, 240)** comporte au moins un élément espaceur **(152, 252).**

6. Outil de coupe **(100, 200)** selon l'une quelconque des revendications précédentes, dans lequel l'élément de serrage **(140, 240)** comporte une tôle métallique montée sur ressort.

7. Outil de coupe **(100, 200)** selon l'une quelconque des revendications précédentes, dans lequel l'outil de coupe **(100, 200)** est choisi dans un groupe constitué d'un sécateur, d'une cisaille, d'un élagueur et de ciseaux.
